Europäisches Patentamt

European Patent Office

Office européen des brevets

(11) Veröffentlichungsnummer: **0 075 229**
**B1**

# EUROPÄISCHE PATENTSCHRIFT

(45) Veröffentlichungstag der Patentschrift:
04.09.85

(21) Anmeldenummer: 82108408.4

(22) Anmeldetag: 11.09.82

(51) Int. Cl.⁴: **B 60 Q 1/38, B 62 J 6/00**

(54) Elektrische Schaltungsanordnung zur Versorgung von Blinklampen.

(30) Priorität: 23.09.81 DE 3137781

(43) Veröffentlichungstag der Anmeldung:
30.03.83 Patentblatt 83/13

(45) Bekanntmachung des Hinweises auf die Patenterteilung:
04.09.85 Patentblatt 85/36

(84) Benannte Vertragsstaaten:
AT DE FR IT

(56) Entgegenhaltungen:
FR - A - 1 089 999
GB - A - 676 760
US - A - 3 387 260
US - A - 3 463 935
US - A - 3 484 626

(73) Patentinhaber: ROBERT BOSCH GMBH, Postfach 50,
D-7000 Stuttgart 1 (DE)

(72) Erfinder: Schmid, Hans-Dieter, Dr., Dipl.-Ing., Kamenzer
Strasse 8, D-8500 Nürnberg (DE)

# Beschreibung

## Stand der Technik

Die Erfindung geht aus von einer elektrischen Schaltungsanordnung zur Versorgung von Blinklampen für Fahrzeuge nach der Gattung des Hauptanspruchs. Es ist bekannt, in Schaltungsanordnungen für Blinklampen zur Fahrtrichtungsanzeige sowohl elektronische als auch thermische Blinkgeber zu verwenden, durch die Blinklampen über einen Fahrtrichtungsschalter intermittierend einschaltbar sind. Dabei sind die elektronischen Blinkgeber wesentlich kostenaufwendiger als thermische Blinkgeber. Ausserdem können sie nicht ohne zusätzliche Bauelemente an eine Wechselspannung angeschlossen werden, so dass sie beispielsweise für Zweirad-Kraftfahrzeuge ungeeignet sind, die mit einem Magnetzündergenerator zur Versorgung eines Wechselstrombordnetzes versehen sind. Bei der Verwendung von thermischen Blinkgebern ist es aus der DE-A-2 638 583 bekannt, zur intermittierenden Beheizung eines Umschaltkontaktes eine Spannungs-Heizwicklung vorzusehen, die mit der Betätigung des Fahrtrichtungsschalters für Links- oder Rechtsabbieger an die Wechselspannung des Magnetgenerators gelegt wird und die beim Umschalten des thermischen Blinkgebers von seinem Umschaltkontakt bis zur nächsten Einschaltphase überbrückt wird. Diese Lösung hat aber den Nachteil, dass die Blinkfrequenz in hohem Masse von den Spannungsschwankungen am Wechselstromgenerator abhängig ist und dass folglich zusätzliche Bauelemente zur Spannungsregelung erforderlich sind, um unzulässige Schwankungen der Blinkfrequenz zu verhindern.

Aus der US-A-3 484 626 ist ferner bekannt, für eine Lauflicht-Blinkanlage eines Kraftfahrzeuges einen thermischen Blinkgeber zu verwenden, bei dem die Beheizung des Bimetall-Schalters durch eine Strom-Heizwicklung erfolgt. Dabei fliesst der Blinklampenstrom unmittelbar über die Strom-Heizwicklung. Der thermische Blinkgeber lässt sich bei dieser bekannten Schaltungsanordnung nicht mit einer Wechselspannung betreiben, da die an ihm angeschlossenen elektronischen Bauelemente zur Erzeugung eines sogenannten Lauflichtes nur mit einer Gleichstromversorgung arbeiten können. Die bekannte Lösung ist daher für Zweirad-Kraftfahrzeuge mit einer Wechselstromversorgung nicht verwendbar.

Der Erfindung liegt die Aufgabe zugrunde, eine Blinkerschaltung mit einem thermischen Blinkgeber in der Weise zu verbessern, dass sie mit einem Wechselspannungsgenerator betrieben werden kann, der möglichst gleichmässig belastet wird und wobei Spannungsschwankungen nur einen unerheblichen Einfluss auf die Blinkfrequenz haben.

## Vorteile der Erfindung

Die erfindungsgemässe Schaltungsanordnung mit den kennzeichnenden Merkmalen des Hauptanspruchs hat den Vorteil, dass bei der Verwendung eines thermischen Blinkgebers mit einem Ruhekontakt und einem Arbeitskontakt eine gleichmässige Belastung der Stromquelle möglich ist, indem ein Teil der Blinklampen am Arbeitskontakt und ein anderer Teil am Ruhekontakt angeschlossen ist, die wechselweise vom Schaltarm des Blinkgebers mit Spannung beaufschlagt werden können. Ein weiterer Vorteil besteht darin, dass diese Schaltungsanordnung sowohl an Gleichspannung als auch an Wechselspannung angeschlossen werden kann, wobei durch die Verwendung einer Strom-Heizwicklung am Blinkgeber Spannungsschwankungen nur noch geringen Einfluss auf die Blinkfrequenz haben. Ausserdem ist ein solcher thermischer Blinkgeber auf einfache Weise kostengünstig herzustellen, ohne dass zusätzliche Massnahmen zur Begrenzung von Schwankungen der Blinkfrequenz erforderlich sind.

Durch die in den Unteransprüchen aufgeführten Massnahmen sind vorteilhafte Weiterbildungen und Verbesserungen der im Hauptanspruch angegebenen Merkmale möglich. Besonders zweckmässig ist es, die vorderen Blinklampen eines Fahrzeuges am Ruhekontakt und die hinteren Blinklampen am Arbeitskontakt des thermischen Blinkgebers anzuschliessen, so dass bei Betätigung des Fahrtrichtungsschalters die entsprechenden vorderen und hinteren Blinklampen für die gewählte Fahrtrichtung jeweils wechselweise vom Blinkgeber ein- und ausgeschaltet werden.

## Zeichnung

Ausführungsbeispiele der Erfindung sind in der Zeichnung dargestellt und in der nachfolgenden Beschreibung näher erläutert. Es zeigen:

Fig. 1 eine elektrische Schaltungsanordnung für die Blinkanlage eines Zweirad-Fahrzeuges mit einem Wechselstromgenerator und einem thermischen Blinkgeber mit einer Strom-Heizwicklung und einem zweipoligen Fahrtrichtungsschalter und

Fig. 2 eine Schaltungsanordnung mit einem einpoligen Fahrtrichtungsschalter und zwei mit Strom-Heizwicklungen versehene Blinkgeber für die rechte bzw. linke Fahrzeugseite.

## Beschreibung der Ausführungsbeispiele

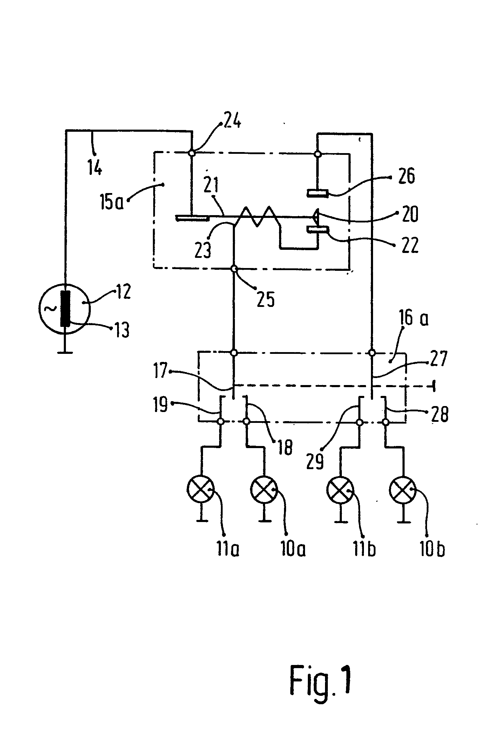

Die in Fig. 1 dargestellte elektrische Schaltungsanordnung für ein nicht dargestelltes Zweirad-Kraftfahrzeig dient zur Versorgung von Blinklampen 10a, 10b und 11a, 11b für die rechte und linke Fahrzeugseite. Die elektrische Versorgung erfolgt durch einen Magnetgenerator 12, der von dem nicht dargestellten Motor des Fahrzeuges angetrieben wird. Der Magnetgenerator 12 ist mit einer Wechselstromwicklung 13 versehen, deren eines Ende auf Masse liegt und deren anderes Ende die Versorgungsspannung für die Blinkanlage des Fahrzeuges führt. Dieses Ende ist über eine Leitung 14 an einem thermischen Blinkgeber 15a angeschlossen, dem ein zweipoliger Fahrtrichtungsschalter 16a mit zwei Umschaltkontakten 17 und 27 nachgeschaltet ist. Für die Anzeige einer Fahrtrichtungsänderung nach links oder rechts ist jeder Umschaltkontakt 17, 27 des Fahrtrichtungsschalters 16a mit zwei Arbeitskontakten versehen, von denen der eine Arbeitskontakt 18, 28 mit den Blinklampen 10a, 10b an der rechten Fahrzeugseite und der Arbeitskontakt 19, 29 mit den Blinklampen 11a, 11b auf der linken Fahrzeugseite verbunden ist. Die Umschaltkontakte 17, 27 des Fahrtrichtungsschalters werden gemeinsam von Hand betätigt, indem sie bei einer Fahrtrichtungsänderung paarweise nach rechts gegen die Arbeitskontakte 18 und 28 und bei einer Fahrtrichtungsänderung nach links gegen die Arbeitskontakte 19 und 29 gedrückt werden.

Um ein intermittierendes Aufleuchten der Blinklampen 10a, 10b oder 11a, 11b zu bekommen, ist der Blinkgeber 15a mit einem an die Leitung 14 der Wechselstromwicklung 13 verbundenen Schaltkontakt 20 versehen, der am freien Ende eines als Schaltarm wirkenden einseitig eingespannten Bimetallstreifens 21 angeordnet ist. Der Schaltkontakt 20 wirkt mit einem Ruhekontakt 22 elektrisch zusammen, der mit einem Ende einer Strom-Heizwicklung 23 verbunden ist. Der Bimetallstreifen 21 ist mit seinem eingespannten Ende mit einer Eingangsklemme 24 des Blinkgebers 15a verbunden und er ist in seinem mittleren Bereich von der Strom-Heizwicklung 23 umgeben. Das andere Ende der Strom-Heizwicklung 23 ist über eine Ausgangsklemme 25 des Blinkgebers 15a und über den daran angeschlossenen Umschaltkontakt 17 des Fahrtrichtungsschalters 16a mit den Blinklampen 10a bzw. 11a zu verbinden.

Der Blinkgeber 15a ist zusätzlich mit einem Arbeitskontakt 26 versehen, der dem Ruhekontakt 22 gegenüberliegt und mit dem der Schaltkontakt 20 des Blinkgebers 15a derart zusammenwirkt, dass bei eingeschalteter Blinkanlage Ruhekontakt 22 und Arbeitskontakt 26 abwechselnd vom Schaltkontakt 20 kontaktiert werden. Der Fahrtrichtungsschalter 16a ist mit seinem zweiten Umschaltkontakt 27 am Arbeitskontakt 26 des Blinkgebers 15a angeschlossen. Die vier Gegenkontakte des Fahrtrichtungsschalters 16a sind jeweils mit einer Blinklampe des Fahrzeuges verbunden, wobei der Gegenkontakt 18 mit der Blinklampe 10a vorn rechts, der Gegenkontakt 19 mit der Blinklampe 11a vorn links, der Gegenkontakt 28 mit der Blinklampe 10b hinten rechts und der Gegenkontakt 29 mit der Blinklampe 11b hinten links verbunden ist.

Durch diese Schaltungsanordnung wird erreicht, dass beim Anzeigen einer Fahrtrichtungsänderung die vordere und hintere Blinklampe jeweils abwechselnd ein- und ausgeschaltet wird, so dass sich für den Magnetgenerator 12 dadurch eine geringere und gleichmässige Belastung bei eingeschalteter Blinkanlage ergibt. Wird beispielsweise bei einer Fahrtrichtungsanzeige nach rechts der Fahrtrichtungsschalter 16a von Hand entsprechend betätigt, so fliesst zunächst ein Strom über den Bimetallstreifen 21 zur Heizwicklung 23 des Blinkgebers 15a und von dort über den Umschaltkontakt 17 des Fahrtrichtungsschalters 16a und den Gegenkontakt 18 zur rechten vorderen Blinklampe 10a. Die Strom-Heizwicklung 23 des Blinkgebers 15a ist hier so ausgelegt, dass bereits der Blinklampenstrom für eine Blinklampe ausreicht, um den Bimetallstreifen 21 kurzzeitig so weit zu erhitzen, dass der Schaltkontakt 20 den Ruhekontakt 22 nach einer von Spannungsschwankungen nahezu unabhängigen Zeit von 0.8 Sekunden öffnet und den Arbeitskontakt 26 schliesst. Die Blinklampe 10a wird dadurch abgeschaltet und über den Arbeitskontakt 26, den Umschaltkontakt 27 des Fahrtrichtungsschalters 16a und den Gegenkontakt 28 wird nunmehr die hintere rechte Blinklampe 10b eingeschaltet. Da die Strom-Heizwicklung 23 nunmehr abgeschaltet ist, kühlt sich der Bimetallstreifen 21 wieder ab und der Schaltkontakt 20 wird nach einem weiteren Zeitintervall von 0,8 Sekunden wieder in seine Ausgangslage zurückbewegt. Der zuvor beschriebene Vorgang wiederholt sich so lange, bis der Fahrtrichtungsschalter 16a wieder in seine neutrale Stellung zurückgeschwenkt wird. Eine entsprechende Arbeitsweise ergibt sich beim Anzeigen der Fahrtrichtungsänderung nach links durch entsprechende Betätigung des Fahrtrichtungsschalters 16a, indem dann die vordere linke Blinklampe 11a und die hintere Blinklampe 11b abwechselnd durch den Schaltkontakt 20 des Blinkgebers 15a ein- und ausgeschaltet wird.

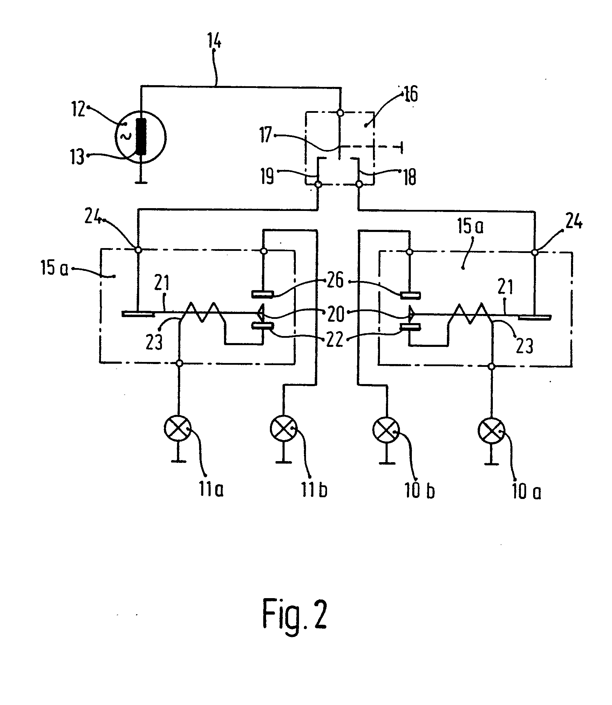

Bei der Schaltungsanordnung nach Fig. 2 ist der Fahrtrichtungsschalter 16 zwischen der Wechselstromwicklung 13 des Magnetgenerators 12 und zwei Blinkgeber 15a angeordnet. Dabei ist der Umschaltkontakt 17 des Fahrtrichtungsschalters 16 unmittelbar über die Leitung 14 mit der Wechselstromwicklung 13 verbunden. Die beiden Gegenkontakte 18 und 19 sind jeweils an die Eingangsklemme 24 eines Blinkgebers 15a angeschlossen, die über den Bimetallstreifen 21 mit dem Schaltkontakt 20 verbunden sind. Der am Gegenkontakt 18 angeschlossene Blinkgeber 15a ist für die rechtsseitigen Blinklampen 10a, 10b vorgesehen, während der am Gegenkontakt 10 des Fahrtrichtungsschalters 16 angeschlossene Blinkgeber 15a zur Betätigung der linksseitigen Blinklampen 11a, 11b dient. Die vorderen Blinklampen 10a und 11a sind dabei jeweils mit dem Ruhekontakt 22 des ihnen zugeordneten Blinkgebers 15a verbunden und die hinteren Blinklampen 10b und 11b sind jeweils an den Arbeitskontakt 26 des entsprechenden Blinkgebers 15a angeschlossen.

Wird der Umschaltkontakt 17 des Fahrtrichtungsschalters 16 nach rechts geschwenkt, so fliesst ein Blinklampenstrom über den Gegenkontakt 18 zum Blinkgeber 15a, über den Bimetallstreifen 21, den Arbeitskontakt 20, den Ruhekontakt 22, die Strom-Heizwicklung 23 und schliesslich über die rechte vordere Blinklampe 10a zur Masse. Wie bereits zu Fig. 1 erläutert, schaltet der Blinkgeber 15a die vordere rechte Blinklampe 10a nach einer Intervallzeit ab und die hintere rechte Blinklampe 10b wird für ein weiteres Zeitintervall eingeschaltet. Der Vorgang wiederholt sich so lange, bis der Umschaltkontakt 17 des Fahrtrichtungsschalters 16 wieder in seine Neutralstellung zurückgeschwenkt wird. In gleicher Weise arbeitet auch der am Gegenkontakt 19 des Fahrtrichtungsschalters 16 angeschlossene Blinkgeber 15a mit den linken Blinklampen 11a und 11b zusammen.

Auch bei dieser Schaltungsanordnung wird eine gleichmässige und geringe Belastung des Magnetgenerators 12 beim Betrieb der Blinkanlage erreicht. Gegenüber der Ausführung nach Fig. 1 kann die Verwendung von zwei Blinkgebern 15a vorteilhaft sein, wenn sie in Verbindung mit einem einpoligen Fahrtrichtungsschalter kostengünstiger ist als ein zweipoliger Fahrtrichtungsschalter mit einem Blinkgeber 15a, oder wenn für einen zweipoligen Schalter der Platz fehlt.

Die Erfindung ist nicht auf die dargestellten Ausführungsbeispiele beschränkt, da anstelle eines Bimetallstreifens 21 auch eine andere, durch eine Strom-Heizwicklung zu beeinflussende Schnappvorrichtung mit einem Schaltkontakt verwendet werden kann.

## Patentansprüche

1. Elektrische Schaltungsanordnung zur Versorgung von Blinklampen (10, 11) für Fahrzeuge, die über einen thermischen Blinkgeber (15a) intermittierend einschaltbar sind, wobei der Blinkgeber (15a) einen mit der Stromversorgung (12) verbundenen Schaltkontakt (20) aufweist, der am freien Ende eines einseitig befestigten, temperaturabhängig arbeitenden Schaltarmes (21) angeordnet ist und mit einem Ruhekontakt (22) zusammenwirkt, und wobei der Schaltarm (21) von einer Strom-Heizwicklung (23) zu erhitzen ist, deren eines Ende mit dem Ruhekontakt (22) und deren anderes Ende mit mindestens einer Blinklampe (10, 11) zu verbinden ist, dadurch gekennzeichnet, dass Blinkgeber (15a) und Blinklampen (10, 11) über einen Fahrtrichtungsschalter (16, 16a) an eine Wechselstromwicklung (13) eines Generators (12) angeschlossen sind und dass der Blinkgeber (15a) einen Arbeitskontakt (26) aufweist, der mit mindestens einer weiteren Blinklampe (10b, 11b) verbunden ist und der abwechselnd zum Ruhekontakt (22) mit dem Schaltkontakt (20) des Schaltarmes (21) zusammenwirkt.

2. Schaltungsanordnung nach Anspruch 1, dadurch gekennzeichnet, dass die Strom-Heizwicklung (23) auf einem den Schaltarm (21) bildenden Bimetallstreifen angeordnet ist.

3. Schaltungsanordnung nach Anspruch 1, dadurch gekennzeichnet, dass der Fahrtrichtungsschalter (16) mit einem Umschaltkontakt (17) an die Strom-Heizwicklung (23) des Blinkgebers (15a) und mit seinen zwei Gegenkontakten (18, 19) mit jeweils der rechten bzw. der linken Fahrzeugseite zugeordneten Blinklampen (10, 11) verbunden ist.

4. Schaltungsanordnung nach Anspruch 1, dadurch gekennzeichnet, dass der Fahrtrichtungsschalter (16a) zweipolig ausgebildet ist, wobei ein erster Umschaltkontakt (17) an die Strom-Heizwicklung (23) des Blinkgebers (15a) und ein zweiter Umschaltkontakt (27) an den Arbeitskontakt (26) des Blinkgebers (15a) angeschlossen ist und dass vier mit den zwei Umschaltkontakten (17, 27) paarweise zusammenwirkende Gegenkontakte (18, 19, 28, 29) des Fahrtrichtungsschalters (16a) jeweils mit mindestens einer Blinklampe (10a, 10b, 11a, 11b) verbunden sind.

5. Schaltungsanordnung nach Anspruch 1, dadurch gekennzeichnet, dass der Fahrtrichtungsschalter (16) zwischen der Wechselstromwicklung (13) des Generators (12) und zwei Blinkgebern (15a) angeordnet ist.

6. Schaltungsanordnung nach Anspruch 5, dadurch gekennzeichnet, dass der Umschaltkontakt (17) des Fahrtrichtungsschalters (16) mit der Wechselstromwicklung (13) des Generators (12) und die zwei Gegenkontakte (18, 19) jeweils mit dem Schaltkontakt (20) eines ihnen zugeordneten Blinkgebers (15a) für die rechts- bzw, linksseitigen Blinklampen (10a, 10b, 11a, 11b) verbunden sind.

## Claims

1. Electric circuit arrangement for supplying flashing lamps (10, 11) for vehicles, which lamps can be intermittently switched on via a thermal flasher (15a), the flasher (15a) being provided with a switching contact (20) which is connected to the power supply (12) and which is arranged at the free end of a contact arm (21) which is mounted on one side and operates in dependence on temperature and acts in conjunction with a normally-closed contact (22) and in which arrangement the contact arm (21) is to be heated by an electric heater winding (23), one end of which is to be connected to the normally-closed contact (22) and the other end of which is to be connected to at least one flashing lamp (10, 11), characterised in that flasher (15a) and flashing lamps (10, 11) are connected via a turn-indicating switch (16, 16a) to an alternating-current winding (13) of a generator (12) and that the flasher (15a) is provided with a normally-open contact (26) which is connected to at least one further flashing lamp (10b, 11b) and which, alternating with the normally-closed contact (22), works in conjunction with the switching contact (20) of the contact arm (21).

2. Circuit arrangement according to Claim 1, characterised in that the electric heater winding (23) is arranged on a bimetallic strip forming the contact arm (21).

3. Circuit arrangement according to Claim 1, characterised in that the turn-indicating switch (16) is connected with a change-over contact (17) to the electric heater winding (23) of the flasher (15a) and with its two opposite contacts (18, 19) to flashing lamps (10, 11) which are in each case connected to the right-hand and to the left-hand vehicle side, respectively.

4. Circuit arrangement according to Claim 1, characterised in that the turn-indicating switch (16a) is constructed to be a two pole switch, a first change-over contact (17) being connected to the electric heater winding (23) of the flasher (15a) and a second change-over contact (27) being connected to the normally-open contact (26) of the flasher (15a) and that four opposite contacts (18, 19, 28, 29), working in pairs in conjunction with the two change-over contacts (17, 27) of the turn-indicating switch (16a) are connected in each case to at least one flashing lamp (10a, 10b, 11a, 11b).

5. Circuit arrangement according to Claim 1, characterised in that the turn-indicating switch (16) is arranged between the alternatig-current winding (13) of the generator (12) and two flashers (15a).

6. Circuit arrangement according to Claim 5, characterised in that the change-over contact (17) of the turn-indicating switch (16) is connected to the alternating-current winding (13) of the generator (12) and the two opposite contacts (18, 19) are in each case connected to the switching contact (20) of a flasher (15a) associated with it for the right or left-hand flashing lamps (10a, 10b, 11a, 11b), respectively.

## Revendications

1. Circuit électrique pour l'alimentation de clignoteurs (10, 11) de véhicules qui sont susceptibles d'être branchés de façon intermittente par un générateur de clignotement thermique (15a), le générateur de clignotement (15a) ayant un contact de commutation (20) relié à l'alimentation en courant (12), contact qui est prévu à l'extrémité libre d'un bras de commutation (21) fixé par une extrémité et qui travaille en fonction de la température, et coopère avec un contact de repos (22) et le bras de commutation (21) est prévu pour être chauffé par un enroulement de chauffage à courant électrique (23), bras dont une extrémité doit être reliée au contact de repos (22) et dont l'autre extrémité doit être reliée à au moins un clignoteur (10, 11), caractérisé en ce que des générateurs de clignotement (15a) et des clignoteurs (10, 11) sont raccordés par un commutateur de direction (16, 16a) à un enroulement de courant alternatif (13) d'un alternateur (12) et en ce que le générateur de clignotement (15a) comporte un contact de travail (26) qui est relié à au moins un autre clignoteur (10b, 11b) et qui coopère en alternance avec le contact de repos (22), avec le contact de commutation (20) du bras de commutation (21).

2. Circuit électrique selon la revendication 1, caractérisé en ce que l'enroulement de chauffage (23) à courant électrique est prévu sur un bilame formant le bras de commutation (21).

3. Circuit électrique selon la revendication 1, caractérisé en ce que le commutateur de direction (16) est relié par un contact-inverseur (17) à l'enroulement de chauffage à courant électrique (23) du générateur de clignotement (15a) et avec ses deux contre-contacts (18, 19) respectivement aux clignoteurs (10, 11) prévus du côté droit et du côté gauche du vehicule.

4. Circuit électrique selon la revendication 1, caractérisé en ce que le commutateur de direction (16a) est bipolaire, un premier contact-inverseur (17) étant relié à l'enroulement de chauffage à courant électrique (23) du générateur de clignotement (15a) et un second contact-inverseur (27) étant relié au contact de travail (26) du générateur de clignotement (15a) et en ce que quatre contre-contacts (18, 19, 28, 29) qui coopèrent par paire avec les deux contacts-inverseurs (17, 27) du commutateur de direction (16a) sont chaque fois reliés à au moins un clignoteur (10a, 10b, 11a, 11b).

5. Circuit électrique selon la revendication 1, caractérisé en ce que le commutateur de direction (16) est prévu entre l'enroulement de courant alternatif (13) de l'alternateur (12) et deux générateurs de clignotement (15a).

6. Circuit électrique selon la revendication 5, caractérisé en ce que le contact-inverseur (17) du commutateur de direction (16) est relié à l'enroulement de courant alternatif (13) de l'alternateur (12) et deux contre-contacts (18, 19) sont chaque fois reliés au contact de commutation (20) d'un générateur de clignotement (15a) qui leur est associé pour les clignoteurs droits et gauches (10a, 10b, 11a, 11b).

Fig.1

Fig. 2